# EUROPEAN PATENT APPLICATION

(11) **EP 2 816 563 A1**
(43) Date of publication of application: **24.12.2014**
(21) Application number: 13172561.6
(22) Date of filing: 18.06.2013
(51) Int. Cl.: G11B 27/034, G11B 27/10

(54) **Video editing**

(71) Applicant: Nokia Corporation, 02610 Espoo (FI)
(72) Inventor: Mate, Sujeet Shyamsundar, 33720 Tampere (FI); Curcio, Igor Danilo Diego, 33100 Tampere (FI); Lehtiniemi, Arto, 33880 Lempäälä (FI)
(74) Representative: Swindell & Pearson Limited

(57) **Abstract**

Apparatus, a method and a computer program are provided. The apparatus comprises: at least one processor; and at least one memory storing computer program instructions configured, working with the at least one processor, to cause at least the following to be performed: causing playback of a video; determining at least one region of interest, selected by a user, from multiple potential regions of interest in the video; and creating an edit of the video that depends upon the at least one region of interest selected by the user.

## Description

### TECHNOLOGICAL FIELD

Embodiments of the present invention relate to video editing. In particular, they relate to editing a video on an electronic device comprising a touch sensitive display.

### BACKGROUND

Video editing is a process of editing motion video footage after it has been captured.

### BRIEF SUMMARY

According to various, but not necessarily all, embodiments of the invention there is provided apparatus, comprising: at least one processor; and at least one memory storing computer program instructions configured, working with the at least one processor, to cause at least the following to be performed: causing playback of a video; determining at least one region of interest, selected by a user, from multiple potential regions of interest in the video; and creating an edit of the video that depends upon the at least one region of interest selected by the user.

According to various, but not necessarily all, embodiments of the invention there is provided a method, comprising: causing playback of a video; determining at least one region of interest, selected by a user, from multiple potential regions of interest in the video; and creating an edit of the video that depends upon the at least one region of interest selected by the user.

According to various, but not necessarily all, embodiments of the invention there is provided a non-transitory computer readable medium storing computer program instructions that, working with at least one processor, cause at least the following to be performed: causing playback of a video; determining at least one region of interest, selected by a user, from multiple potential regions of interest in the video; and creating an edit of the video that depends upon the at least one region of interest selected by the user.

According to various, but not necessarily all, embodiments of the invention there is provided apparatus, comprising: means for causing playback of a video; means for determining at least one region of interest, selected by a user, from multiple potential regions of interest in the video; and means for creating an edit of the video that depends upon the at least one region of interest selected by the user.

### BRIEF DESCRIPTION

For a better understanding of various examples that are useful for understanding the brief description, reference will now be made by way of example only to the accompanying drawings in which:
Fig. 1 illustrates an apparatus in the form of a chipset;
Fig. 2 illustrates an apparatus in the form of a portable electronic device;
Fig. 3 illustrates a flow chart of a method;
Fig. 4 illustrates an electronic device displaying a video;
Fig. 5 illustrates a first example in which a video has been paused and a first indicated view area is displayed in the paused video scene;
Fig. 6 illustrates an instance where the indicated view area has been moved and resized relative to Fig. 5;
Fig. 7 illustrates an edit of the scene in the video based on the moved and resized view area;
Fig. 8 illustrates a situation in which the view area illustrated in Fig. 5 has been moved towards a potential object of interest;
Fig. 9 illustrates the view area positioned at the potential object of interest;
Fig. 10 illustrates a second example in which the video has been paused and multiple potential regions of interest in the video have been identified;
Fig. 11 illustrates a pinching gesture being made to select a plurality of regions of interest from the multiple potential regions of interest;
Fig. 12 illustrates the selected regions of interest being displayed;
Fig. 13 illustrates a third example in which the video has been paused and multiple potential regions of interest in the video have been identified; and
Fig. 14 illustrates a fourth example in which a different scene in the video is displayed from that illustrated in Figs 4 to 13.

### DETAILED DESCRIPTION

Embodiments of the invention provide various techniques for editing video on an electronic device such as a portable electronic device. In particular, a number of techniques for editing video using a touch sensitive display are described below.

In this regard, the figures illustrate apparatus 10/20, comprising: at least one processor 12; and at least one memory 14 storing computer program instructions 18 configured, working with the at least one processor 12, to cause at least the following to be performed: causing playback of a video 15; determining at least one region of interest, selected by a user, from multiple potential regions of interest in the video 15; and creating an edit of the video 15 that depends upon the at least one region of interest selected by the user.

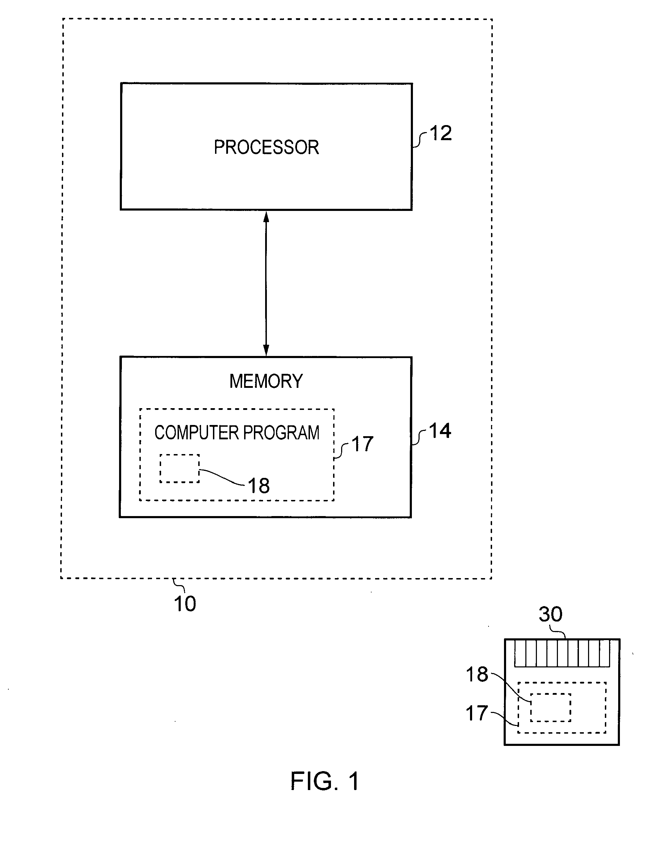

Fig. 1 illustrates an apparatus 10 that may be a chip or a chipset. The apparatus 10 comprises one or more processors 12 (in the form of processing circuitry) and at least one memory 14 (in the form of memory circuitry). A single processor 12 and a single memory 14 are shown in Fig. 1 for illustrative purposes.

The processor 12 is configured to read from and write to the memory 14. The processor 12 may comprise an output interface via which data and/or commands are output by the processor 12 and an input interface via which data and/or commands are input to the processor 12.

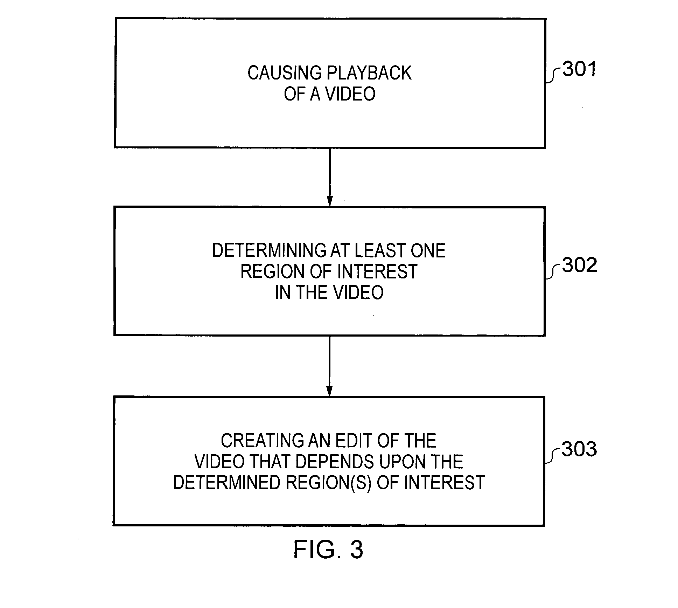

The memory 14 stores computer program instructions/code 18 that control the operation of the apparatus 10 when loaded into the processor 12. The computer program code 18 provides the logic and routines that enables the apparatus 10 to perform the method illustrated in Fig. 3. The processor 12, by reading the memory 14, is able to load and execute the computer program instructions 18.

Although the memory 14 is illustrated as a single component it may be implemented as one or more separate components some or all of which may be integrated/removable and/or may provide permanent/semi-permanent/ dynamic/cached storage.

The computer program instructions 18 may arrive at the apparatus 10 via any suitable delivery mechanism 30. The delivery mechanism 30 may be, for example, a non-transitory computer-readable storage medium such as a compact disc read-only memory (CD-ROM) or digital versatile disc (DVD). The delivery mechanism 30 may be a signal configured to reliably transfer the computer program instructions 18. The apparatus 10 may cause the propagation or transmission of the computer program instructions 18 as a computer data signal.

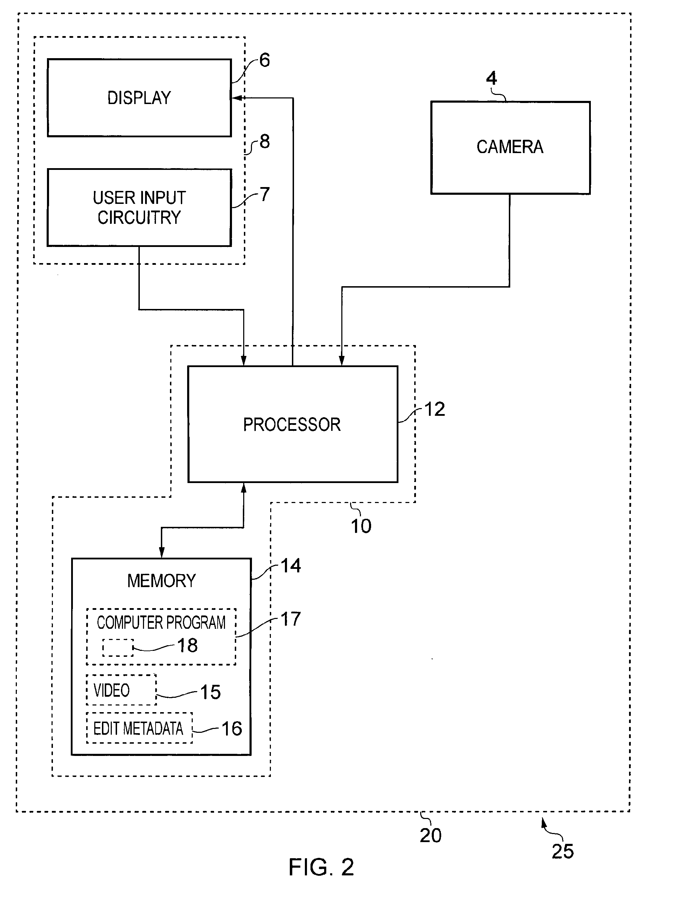

Fig. 2 illustrates a further apparatus 20 in the form of an electronic device. The electronic device 20 may be a portable electronic device such as, for example, a mobile telephone, a portable music player, a hand held games console or a tablet computer.

The electronic device/apparatus 20 illustrated in Fig. 2 includes a camera 4, a display 6, user input circuitry 7, an external housing 25 and the apparatus 10 illustrated in Fig. 1. In this example the external housing 25 houses the camera 4, the display 6, the user input circuitry 7, the processor 12 and the memory 14.

The display 6 is configured to display information under the control of the processor 12. The display 6 may be any type of display. It may, for example, be a liquid crystal display (LCD), an organic light emitting diode (OLED) display or a quantum dot display.

The user input circuitry 7 is configured to receive inputs from a user. In response to receiving an input from a user, the user input circuitry 7 provides a signal to the processor 12 that depends upon the input that has been provided by the user.

In some embodiments of the invention, at least part of the user input circuitry 7 is integrated with the display 6, in the form of a touch sensitive display 8. The touch sensitive display 8 may be any type of touch sensitive display. It might function, for example, using capacitive, resistive, infrared, dispersive signal and/or acoustic pulse technology.

The memory 14 is illustrated in Fig. 2 as storing a video 15 and edit metadata 16. The video 15 and the edit metadata 16 are described in further detail below.

The elements 4, 6, 7, 12 and 14 are operationally coupled and any number or combination of intervening elements can exist between them (including no intervening elements).

Fig. 3 illustrates a flow chart of a method according to embodiments of the invention. At block 301 of Fig. 3, a user provides input, at the user input circuitry 7, to cause the apparatus 20 to playback a video on the display 6. In some implementations, the video 15 is stored as data locally in the memory 14 of the apparatus 20. In other implementations, the video 15 is stored as data remotely from the apparatus 20 and streamed by the apparatus 20 over a network. The apparatus 20 may, for instance, include a radio frequency receiver/transceiver for streaming the video 15.

The video 15 may have been captured by the camera 4 of the apparatus 20. Alternatively, the video 15 may have been captured by another apparatus. In some cases, the video 15 may have been pre-edited to some extent already, for example, such that the video 15 includes some scenes that were captured by the camera 4 of the apparatus 20 and some scenes that were captured by another apparatus.

A video "scene" is considered to be a video segment, spanning a period of time, in which the camera that captured the video segment is substantially stationary relative to one or more regions/objects in the scene (or was subject to only a small amount of panning and/or tilting relative to the region(s)/object(s)). In some cases, the camera may have been substantially stationary during video capture (for instance, if people in the video scene were reasonably static during the capture of the scene). In other cases, the camera may have been moving during video capture, while remaining substantially stationary relative to one or more objects in the scene (for instance, a running person).

The processor 12 may be configured to identify the time duration over which a particular scene is present in a video by analyzing visual aspects and/or audio aspects of the video.

In circumstances where a video includes a first video segment which was captured by a first camera and a second video segment which was captured from a different position and/or orientation (for instance, by a different camera), the first and second video segments are considered to constitute different "scenes", irrespective of whether the same people/objects are present in the first and second video segments.

The processor 12 responds to the user input by causing the playback of the video on the display 6.

The video 15 may or may not have a different resolution from the display 6 of the apparatus 20. The aspect ratio of the video 15 may or may not be the same as the aspect ratio of the display 6.

Consider an example in which the video 15 is captured at a QHD (Quad High Definition; sometimes known as WQHD: Wide Quad High Definition) resolution of 2560 x 1440 and the display 6 has a HD (High Definition) resolution of 1280 x 720. The video 15 has four times as many pixels as the display 6 so, if the full extent of the video 15 is to be displayed in terms of both height and width, the processor 12 may downscale the video 15 by converting sets of four pixels in the video 15 into single pixels for display on the display 6.

While the video 15 is being played back on the display 6, the user provides input at the user input circuitry 7 to pause the video 15. The processor 12 responds to the input by pausing the video 15 at the instance in time in the video 15 that the input was provided. If the apparatus 20 comprises a touch sensitive display 8, merely touching the display 6 may cause the processor 12 to respond by pausing the video 15. Alternatively, touching the display 6 may cause the processor 12 to respond by controlling the display 6 to display a user interface item that, when selected by the user, causes the processor 12 to pause the video 15.

The processor 12 may then cause the apparatus 20 to enter an edit mode. In some implementations, the processor 12 causes the apparatus 20 to enter the edit mode automatically when the video 15 is paused. In other implementations, further user input is required at the user input circuitry 7 to cause the processor 12 to respond by placing the apparatus 20 into the edit mode.

In situations where the total extent (that is the total height and total width) of the video 15 is not being displayed on the display 6 when the video 15 is paused (for example, because the aspect ratio of the video 15 and the display 6 are different), the processor 12 may or may not revert to displaying the total extent of the video when the edit mode is entered, to enable the user to see the whole of the paused scene. When the total extent of the video 15 is displayed, the video 15 is shown in its true aspect ratio on the display 6.

In some implementations, when the apparatus 20 enters the edit mode, the processor 12 identifies potential regions of interest in the paused scene of the video 15. The processor 12 does this by analyzing the paused scene for potential regions of interest. The processor 12 may or may not analyze any regions of the video 15 that were not being displayed when the video 15 was being played back on the display 6 (for example, because the aspect ratio of the video 15 and the display 6 are different).

Multiple potential regions of interest may be identified by the processor 12. The processor 12 may identify potential regions of interest in the paused scene displayed on the display 6, for example, by highlighting those regions. The identification of the potential regions of interest by the processor 12 and their identification/highlighting on the display 6 may be done automatically by the processor 12 when the apparatus 20 enters the edit mode.

The potential regions of interest may be or include objects of interest. Objects of interest may, for instance, include human bodies, faces, or objects that are identifiable against a background (such as, for instance, a skyscraper against a blue sky), etc.

At block 302 of Fig. 3, the user selects one or more regions of interest from the multiple potential regions of interest. If the apparatus 20 comprises a touch sensitive display 8, the user may select the region(s) of interest by providing touch input at the touch sensitive display 8. The processor 12 determines the region(s) of interest from the input provided by the user.

At block 303 of Fig. 3, the processor 12 begins to create an edit of the video 15 that depends upon the region(s) of interest selected by the user. The processor 12 may cause the selected region(s) of interest from the paused video scene to appear in the edit of that scene and may cut out some other portions from the edit of the scene. For instance, if a particular object (such as a person) is selected as an object of interest in the video 15, the edit of the scene may include a close-up of the selected object and much of the background that surrounds the selected object may be cut from the edit of the scene. Unselected potential regions of interest may also be cut from the edit of the scene.

The time duration over which a scene is edited may vary in different instances or implementations.

In some instances/implementations, the paused scene is only edited for the remainder of the scene that follows the instance in time at which the scene was paused, and not any part of the scene which precedes that instance in time. For instance, consider a situation where a scene is present in the video between 1 minute and 30 seconds and 2 minutes 45 seconds. The user pauses the video at 1 minute and 50 seconds and selects regions of interest in the edit mode. In these implementations, the selection of the regions of interest when the video is paused at 1 minute and 50 seconds only affects the appearance of the scene in the video edit between 1 minute 50 seconds and 2 minutes 45 seconds. It does not affect the appearance of the scene in the video edit between 1 minute 30 seconds and 1 minute 50 seconds. During that time period the scene may, for example, be unchanged in the video edit.

In some instances/implementations, the paused scene is only edited for a portion of the scene. For example, the paused scene may be edited for a portion, but not all of, the remainder of the scene that follows the instance of time at which the scene was paused. In the context of the above example, where a particular scene is present in the video between 1 minute and 30 seconds and 2 minutes and 45 seconds, if the user pauses the video and selects regions of interest at 1 minute and 50 seconds, he could choose to edit the scene across a portion spanning 1 minute and 50 seconds and 2 minutes and 20 seconds. It may even be possible for a user to choose to edit the scene over a time period in the video that precedes the instance at which the video was paused, such as between 1 minute and 30 seconds and 1 minute and 50 seconds.

In some further instances/implementations, the paused scene is edited before and after the scene was paused. In the context of the above example, where a scene is present in the video between 1 minute and 30 seconds and 2 minutes and 45 seconds, pausing the video at 1 minute and 50 seconds and selecting regions of interest affects the appearance of the scene across its whole duration (that is, from 1 minute and 30 seconds to 2 minutes and 45 seconds).

The time duration over which the paused scene is edited could span anything from a single frame in the video to the whole duration of the scene.

The user may provide user input which causes the processor 12 to resume playback of the video 15 after the regions of interest have been selected. The playback of the video 15 resumes from the instance in time at which the video 15 was paused. The version of the video 15 that is displayed when the playback of the video 15 is resumed may be the edit of the video. For example, if the user selected a particular object of interest in the edit mode such that the edit of a scene includes a close up of that object, the close-up is played back on the display 6.

In circumstances where the video has a different (for example, higher) resolution than the display 6 of the apparatus 10, edited scenes may be formed using the original video rather than any downscaled version that is displayed on the display 6. For instance, if the video has a WQHD resolution and the display has a HD resolution, the edited scenes may be formed from the original WQHD footage to maintain a high quality level.

The edit of the video may be created in a number of different ways. In some implementations, the original video file is altered to produce the edit. The processor 12 may or may not replace the original video file in the memory 14 with the edited video file. In other implementations, the original video file is not altered and instead a metadata file 16 is created which defines the edit. The edit metadata 16 effectively defines a particular, edited, version of the video 15 for future playback by the apparatus 20 or other apparatuses. In the event that a user of another apparatus already has the video file 15, the user of the apparatus can share his edit of the video with that other user by sharing the edit metadata 16 rather than a whole edited video file. The edit metadata might be (much) smaller in size than an edited video file would be.

Some particular examples of the method described above in conjunction with Fig. 3 will now be described.

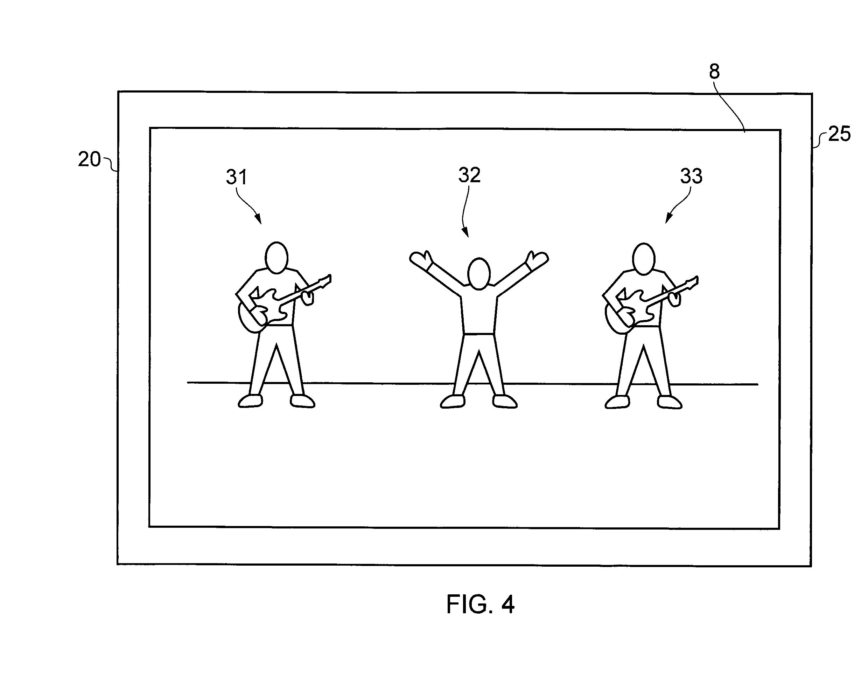

Fig. 4 illustrates an example of a scene in a video 15 being played back on the apparatus 20 which has been paused. The scene includes a band consisting of three people 31, 32, 33: the base guitarist Arto, 31, the lead singer Sujeet 32 and the rhythm guitarist Igor 33.

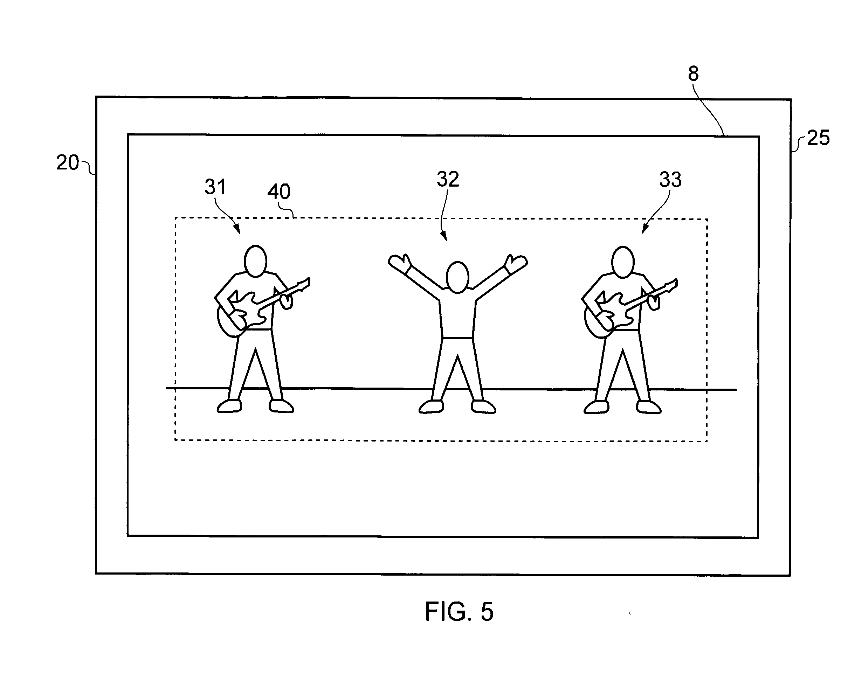

A first example of the edit mode described above will now be described in conjunction with Figs 5 to 9. In this first example, when the video 15 is paused and apparatus 20 enters the edit mode, a view area 40 is indicated on the display 6. This is illustrated in Fig. 5. In the illustrated implementation, the view area 40 is indicated by a dotted line which is displayed on the display 6, but that need not necessarily be the case. The view area 40 could be illustrated by a solid line and/or shading, for example.

The portion of the scene inside the dotted line 40 is that which will be displayed in the edit of the video. The portion of the scene that is positioned outside the dotted line 40 will not appear in the edited version of the scene.

The processor 12 may enable the user to alter the view area 40. For instance, the user may be able to adjust the view area 40 by moving and/or resizing it. In some implementations where the apparatus 20 includes a touch sensitive display 8, the processor 12 may respond to the user placing and holding a user input object (such as a user digit or a stylus) in contact with the display 8 by iteratively changing the size of the view area 40, over a period of time, while the user input object is held in place. The view area 40 may, for example, become successively larger until the maximum size is reached, at which point the next change in size results in the view area 40 reverting to its minimum size and then it becomes successively larger again. At each size, the view area 40 may have the same aspect ratio as the display 8.

The user may confirm the size of the view area 40 by removing the user input object from the display 8. If, for instance, the view area 40 is confirmed to be the size illustrated in Fig. 5, the edited scene will include a zoomed-in view of the three people 31, 32, 33 because, in the edited scene, the portion of the video inside the view area 40 will be expanded to fit the full extent of the display 8. The portion of the scene situated outside the view area 40 will not be present in the edit of the scene that appears in the video edit.

In an alternative implementation of the first example, the processor 12 may enable the user to move the view area 40 by placing a user interface object (such as a user digit or a stylus) in contact with the display 8 and moving it across the display 8. In this implementation, the processor 12 may also enable the user to resize the view area 40 by performing a pinching gesture. For instance, if the user performs a "closing pinching gesture" by placing two user interface objects in contact with the display 8, at least one of which is positioned inside the indicated view area 40, and then brings the user interface objects closer to one another while both remain in contact with the display 8, the processor 12 may respond by reducing the size of the view area 40. If, for instance, the user performs an "opening pinching gesture" by placing two user interface objects in contact with the display 8, at least one of which is positioned inside the indicated view area 40, and then moves the user interface objects further from one another while both remain in contact with the display 8, the processor 12 may respond by increasing the size of the view area 40.

The processor 12 may be configured to maintain the aspect ratio of the view area 40 (for instance, such that it is the same as the aspect ratio of the display 8) as the size of the view area 40 changes. The processor 12 may also enable the user to rotate the view area 40.

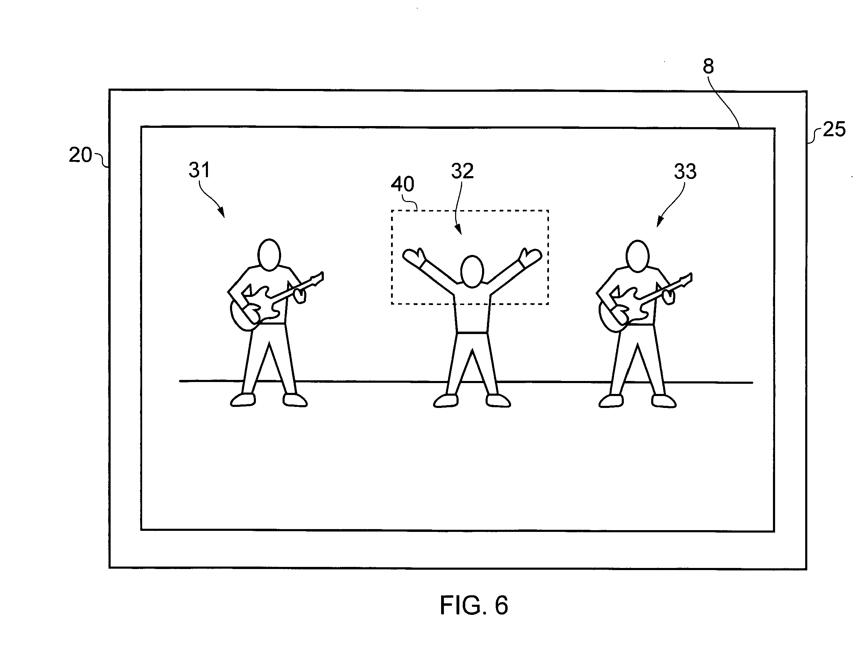

Fig. 6 illustrates a situation where the view area 40 has been moved and resized by the user, relative to Fig. 5. In Fig. 6, the view area 40 is centered on Sujeet's head. That is, the user has selected Sujeet's head as a region/object of interest.

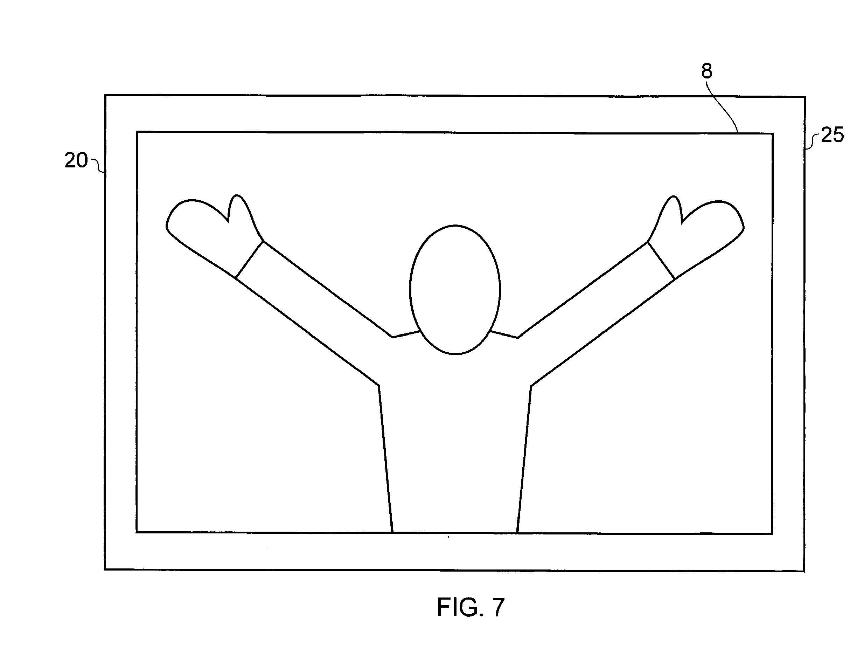

Fig. 7 illustrates the edit of scene that will be created from positioning the view area in the location shown in Fig. 6. This edit of the scene is also what will be displayed when playback of the video 15 on the apparatus 20 resumes.

In some implementations of this first example of the edit mode, the processor 12 identifies potential regions of interest (such as objects of interest) when the apparatus 20 enters the edit mode and, if the view area 40 is moved such as it encompasses a potential region of interest, the view area 40 automatically centers on (that is, "snaps" to) that potential region of interest.

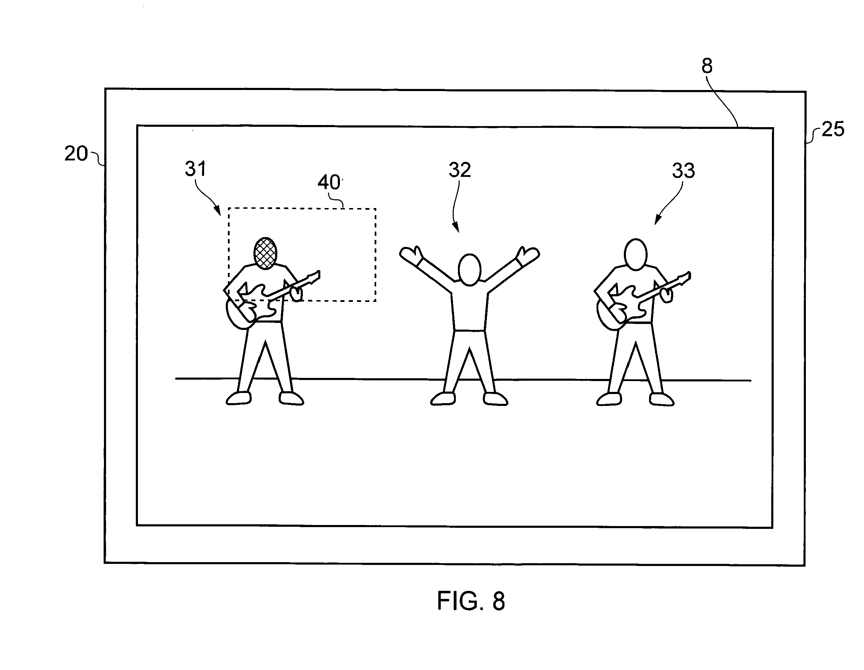

Fig. 8 illustrates an instance in which the view area 40 illustrated in Fig. 6 has been moved to encompass Arto's face, which has been identified by the processor 12 to be a region/object of potential interest. The view area 40 is moved by placing a user interface object in contact with the display 8 and moving it across the display 8 while it is still in contact with the display 8. The user moves the view area 40 to select Arto's face as an object/region of interest.

Here, when the view area 40 is moved to encompass region/object of interest that is Arto's face, the processor 12 responds by automatically indicating Arto's face to be an object of interest, for instance, by highlighting. Alternatively, in some implementations, all potential regions/objects of interest might be highlighted before the view area 40 is moved to encompass them.

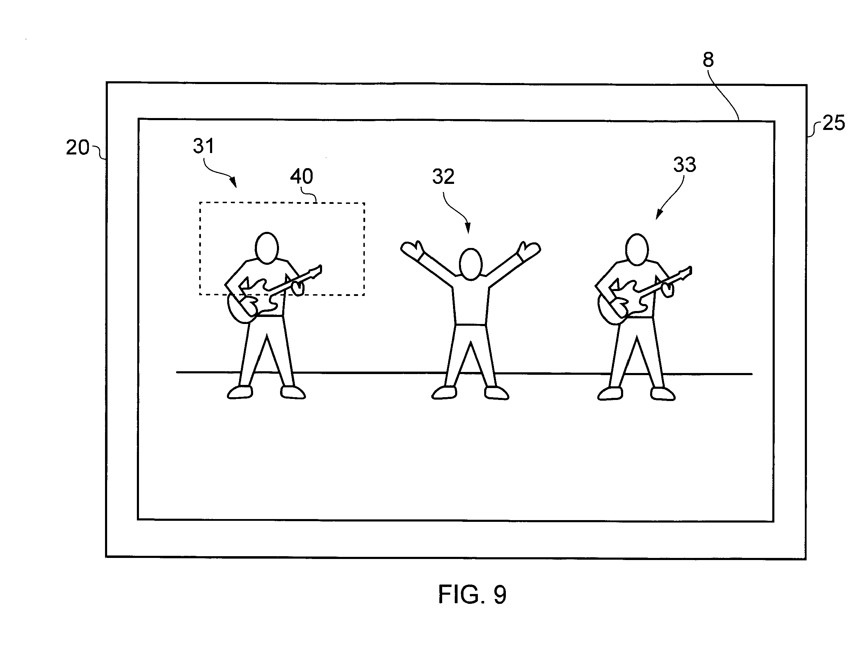

If the user removes the user interface object from the display 8 when the view area 40 is located in the position illustrated in Fig. 8, the processor 12 responds by centering the view area 40 on Arto's face's as illustrated in Fig. 9.

An edit of the scene is then created in accordance with the position of the view area 40 illustrated in Fig. 9. The view area 40 may remain locked onto the object of interest during the edit, at least as far as is possible. For instance, in the event that the object of interest (in this case, Arto's face) moves within the scene, the view area 40 moves with and remains locked onto Arto's face. If Arto's face moves out of the (original) video scene, such that is no longer present, the processor 12 may change the view area 40 to encompass more of the originally captured video scene. For instance, it may change the view area 40 to encompass the whole of the originally captured video scene so that both Sujeet 32 and Igor 33 can be seen again in the edited scene. The processor 12 may be configured to analyze the (original) video scene over time to detect if and when the object of interest (Arto's face) re-enters the (original) video scene. If and when this occurs, the processor 12 may automatically (that is, without further user intervention) change the view area 40 by locking back onto the object of interest (Arto's face) in the edit.

In the above example, when the object of interest leaves the scene, the processor 12 reverts to a wider angle ("zoomed-out") view of the scene in the edit. When the object of interest re-enters the scene, the processor 12 changes to a narrower angle ("zoomed-in") view of the scene that includes (and may be centered upon) the object of interest.

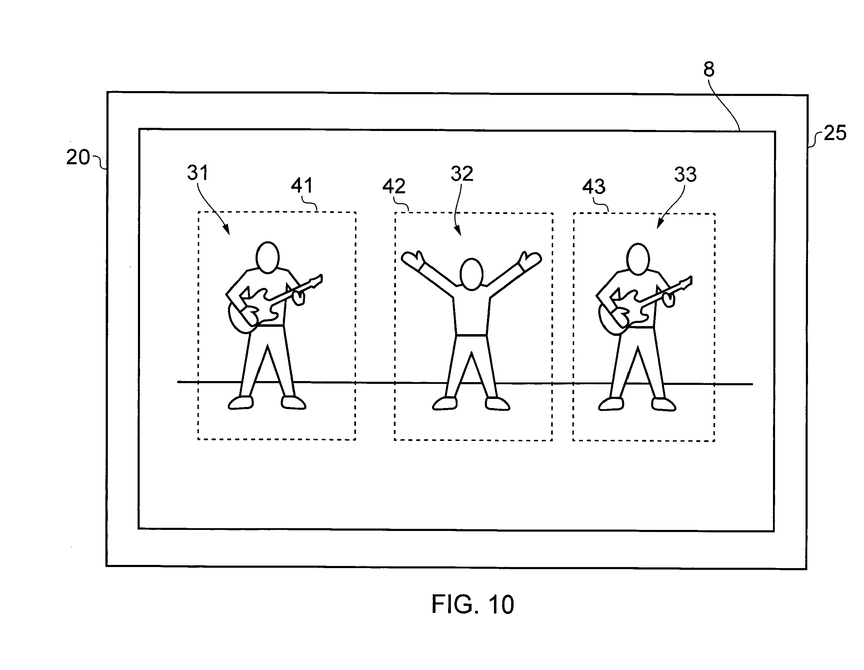

A second example of the edit mode will now be described in relation to Figs 10 to 12. In this example, unlike in Figs 5 to 9, the dotted lines 41, 42, 43 illustrated in Fig. 10 do not represent a "view area" like the dotted line 40. Fig. 10 illustrates a situation where the video 15 has been paused. The processor 12 has caused the apparatus 20 to enter the edit mode and has indicated three potential regions/objects of interest 31, 32, 33. The presence of the dotted lines 41, 42, 43 on the display 8 highlights the three potential regions/objects of interest 31, 32, 33 to the user. In an alternative implementation, the three regions/objects of interest 31, 32, 33 might be, for instance, be highlighted by coloring/shading rather than having dotted lines 41, 42, 43 around them.

In some instances, a view area 40 indicating what will be displayed in the edit of the scene might also be present on the display 8 in this example, but it is not shown in Fig. 10 for clarity.

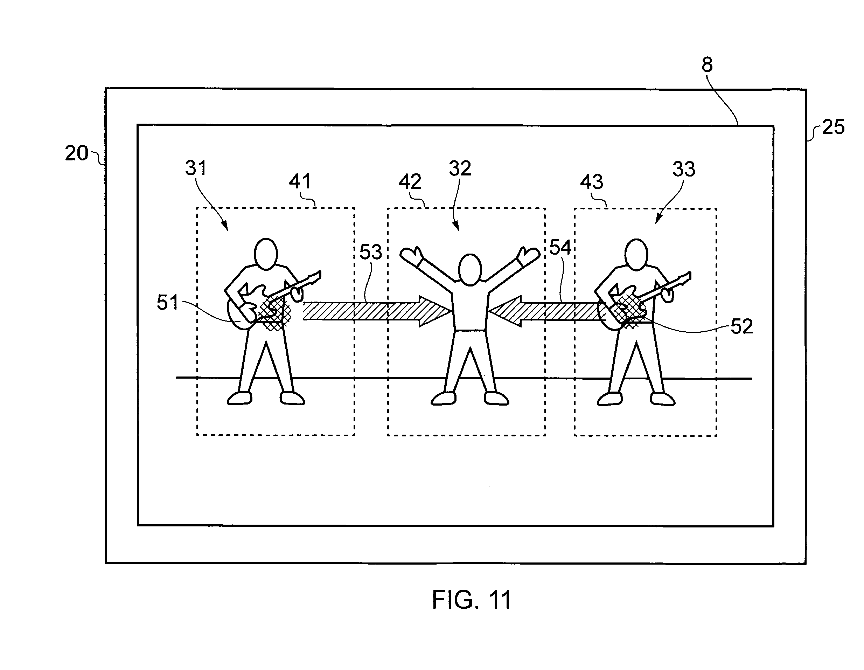

In this second example, the user decides that he wishes to create an edit of the scene illustrated in Fig. 10 that includes Arto 41 and Igor 43 but excludes Sujeet 42. The user places a user interface object (such as a user digit or a stylus) on Arto 41 and places user interface object (such as another user digit or another stylus) on Igor 43. The user then performs a "closing pinching gesture" by bringing the user interface objects closer to one another while both remain in contact with the display 8. The position at which the first user interface object is placed on the display 8 is indicated by the reference number 51 in Fig. 11 and the direction in which it is moved is indicated by the arrow labeled with the reference numeral 53. The position at which the second user interface object is placed on the display is indicated by the reference number 52 in Fig. 11 and the direction in which it is moved is indicated by the arrow labeled with the reference numeral 54.

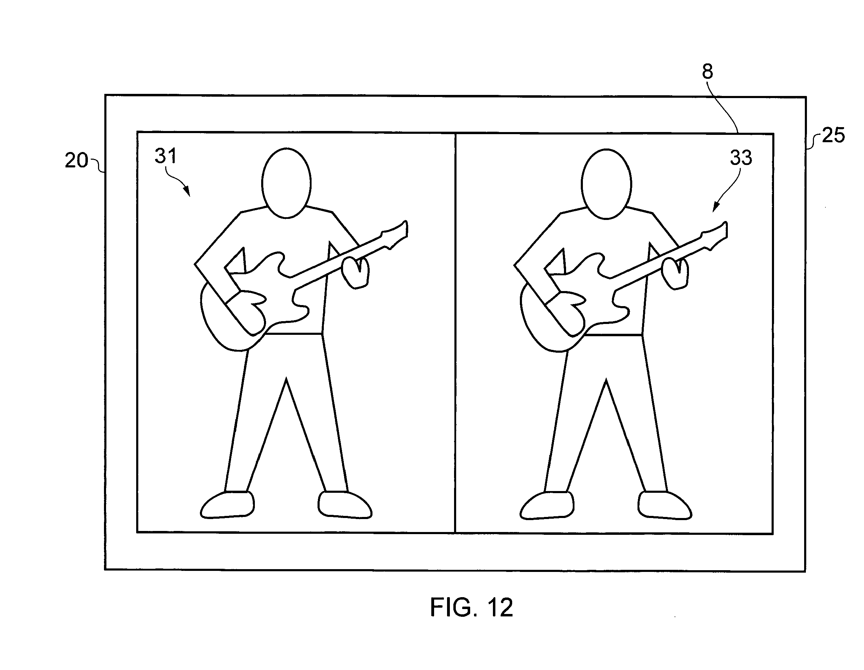

The processor 12 responds to the closing pinching gesture by excluding Sujeet 42, who was indicated to be a potential region/object of interest, from the edit of the scene. Fig. 12 illustrates the edit of the scene that is created by the processor 12. It can be seen that a split-screen view has been created in the edit which includes Arto 31 and Igor 33, but not Sujeet 32. The portions of the scene which include Arto 31 and Igor 33 have been expanded such that, collectively, they fill the display 8. This edit of the scene is also what will be displayed when playback of the video 15 on the apparatus 20 resumes.

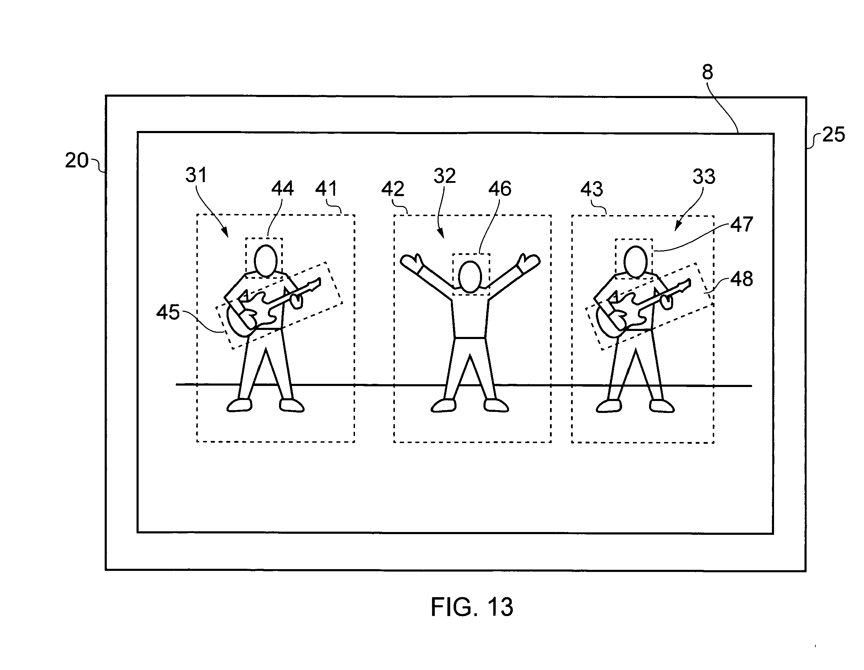

A third example of the edit mode will now be described in relation to Fig. 13. The situation illustrated in Fig. 13 is similar to that in Fig. 11 in that the video 15 has been paused, the processor 12 has caused the apparatus 20 to enter the edit mode and the processor 12 has indicated the bodies of Arto 31, Sujeet 32 and Igor 33 to be three potential regions/objects of interest. In addition, in Fig. 13 the processor 12 has identified and indicated the faces of Arto, Sujeet and Igor 31-33 to be potential regions/objects of interest, as indicated by the dotted lines 44, 46 and 47. It has also identified and indicated the guitars of Arto and Igor 31, 33 to be potential regions/objects of interest, as indicated by the dotted lines 45 and 48.

In this third example, the user may provide input to select various regions/objects of interest from the indicated potential regions/objects of interest. For instance, the user may provide touch input at one or more of the indicated potential regions/objects of interest to select it/them as a region/object of interest.

The processor 12 determines which of the potential regions/objects of interest have been selected by the user and creates an edit of the scene that depends upon the selections. For example, if the user selects Arto's guitar, Sujeet's face and Igor's guitar, an edit of the scene will be created that includes those objects of interest. All of the selected objects of interest need not be displayed concurrently throughout the edit of scene. For instance, Arto's guitar and Igor's guitar could be shown together for a certain period of time in the edit of the scene, followed by Sujeet's face for another, subsequent period of time.

It may be possible for the user to provide inputs that indicate the degree of emphasis that should be placed on one selected region/object of interest versus the others in the edit of the scene. For example, merely touching a potential region/object of interest momentarily might select it as a region/object of interest. The user may be able to place a greater degree of emphasis on a selected region/object of interest by holding a user interface object at the region/object for a longer period of time. It may be that the longer the user interface object is held in contact with the region/object, the greater emphasis that is placed on the region/object. The processor 12 may provide some visual feedback to the user that a greater emphasis is being placed on a particular region/object of interest as the input is being provided by the user. For instance, the processor 12 may highlight a region/object of interest when it is initially selected by the user, for example, by coloring or shading and then gradually change the coloring/shading while user input is being provided to place a greater emphasis on that region/object.

As with the first and second example, the edit of the scene that is created is also what will be displayed when playback of the video 15 on the apparatus 20 resumes.

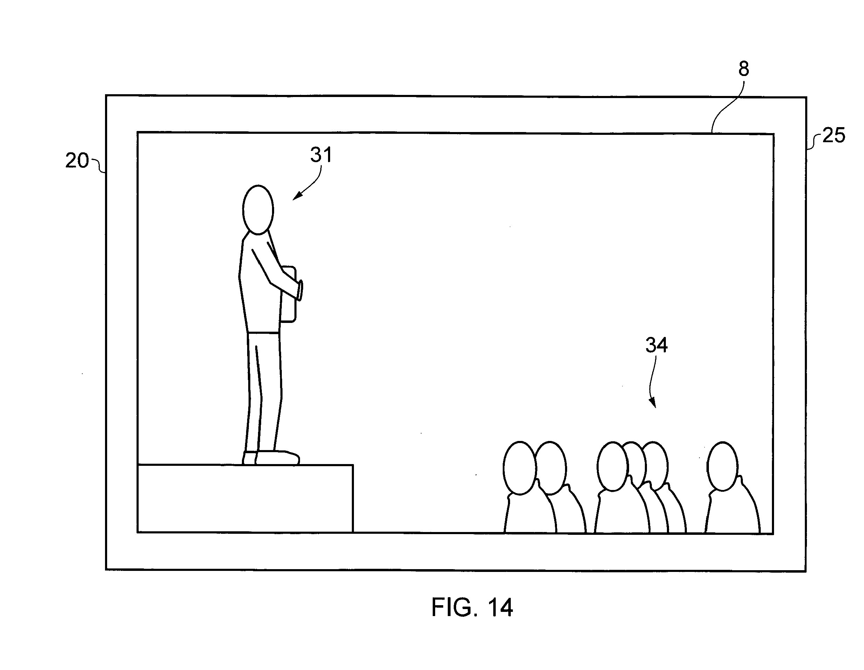

A fourth example of the edit mode will now be described in relation to Fig. 14. In this example, the video includes multiple different scenes. This may be because, for example, the camera that captured the video panned or tilted more than a threshold amount (creating a new view/scene) or because some of the video was captured by a different camera located in a different position.

Fig. 14 illustrates an example of a later scene in the video 15. It can be seen that the scene in Fig. 14 is a side view that includes Arto 31 and the audience 34 listening to the band.

In this fourth example, an edit of the scene illustrated in Fig. 4 may be created from user selection of one or more regions/object of interest as described above in relation to the first, second and third examples. When playback of the video 15 resumes and the video moves to second scene, such as that illustrated in Fig. 14, the user may also use the apparatus 20 to create an edit of that second scene as described above in relation to the first, second and third examples.

In the event that the video 15 then switches back to the first scene (as illustrated in Fig. 4) the processor 12 may automatically use the selections that were made when the edit of the first scene was created for an earlier part of the video, to create an edit of the first scene in the later part of the video 15. For instance, if the edit of the first scene in the earlier part of the video 15 included Arto 31 and Igor 33 but excluded Sujeet 32 (as illustrated in Fig. 12), then the edit of the first scene in the later part of the video may also include Arto 31 and Igor 33 but exclude Sujeet 32.

In some implementations of the fourth example, the processor 12 determines that one or more regions/objects of interest were selected in respect of the first scene in an earlier part of the video, and automatically considers that they are selected regions/objects of interest for the first scene in the later part of the video. The processor 12 does not request nor require any further user input to create the edit. In other implementations, the processor 12 automatically considers that the previously selected regions/objects of interest are selected regions/objects of interest for the first scene in the later part of the video, but requests confirmation of that from the user.

References to 'computer-readable storage medium', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processor. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in Fig. 3 may represent steps in a method and/or sections of code in the computer program 17. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For instance, the description of how a scene is edited when an object of interest leaves (and then possibly re-enters) a video scene in the second example may also apply to the third and fourth examples.

It may be possible for the user to create a new edit of a video when the video is being played on the apparatus 20 in edited form. For instance, consider a situation in which the apparatus 20 is playing an edited version of a video and edit metadata 16 defines the edit. Provided that the apparatus 10/20 has access to the original video (either locally or remotely), the processor 12 may be configured to enable the user to create a new edit of the original video when the apparatus 20 enters the edit mode.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. Apparatus, comprising:
at least one processor; and
at least one memory storing computer program instructions configured, working with the at least one processor, to cause at least the following to be performed:
causing playback of a video;
determining at least one region of interest, selected by a user, from multiple potential regions of interest in the video; and
creating an edit of the video that depends upon the at least one region of interest selected by the user.

2. Apparatus as claimed in claim 1, wherein the computer program instructions are configured, working with the at least one processor, to further cause the following to be performed: pausing the video at an instance in time in the video; and causing the apparatus to enter an edit mode, when the video is paused, which enables a user to select the at least one region of interest from the multiple potential regions of interest.

3. Apparatus as claimed in claim 2, wherein the computer program instructions are configured, working with the at least one processor, to further cause the following to be performed: after pausing the video, resuming playback of the video from the instance in time, in response to user input, by playing the edit of the video.

4. Apparatus as claimed in claim 2 or 3, wherein a scene in the video is paused at the instance in time; and at least a portion of the remainder of the scene, subsequent to the instance in time, depends upon the determined at least one region of interest.

5. Apparatus as claimed in claim 4, wherein one or more unselected potential regions of interest from the multiple potential regions of interest are cut from at least a portion of the remainder of the scene, subsequent to the instance in time, in the edit of the video.

6. Apparatus as claimed in claim 4 or 5, wherein any other scenes in the video prior to the instance in time are unaffected in the edit of the video by the selection of the at least one region of interest.

7. Apparatus as claimed in any of claims 2 to 6, wherein the computer program instructions are configured, working with the at least one processor, to further cause the following to be performed: automatically highlighting at least some of the multiple potential regions of interest when the apparatus is in the edit mode.

8. Apparatus as claimed in claim 7, wherein the computer program instructions are configured, working with the at least one processor, to further cause the following to be performed: analyzing the video, when the video enters the edit mode, to identify at least some of the multiple potential regions of interest for highlighting.

9. Apparatus as claimed in any of the preceding claims, wherein a plurality of regions of interest, from the multiple potential regions of interest, are selected by the user using a pinching gesture.

10. Apparatus as claimed in claim 9, wherein the computer program instructions are configured, working with the at least one processor, to further cause the following to be performed: excluding at least one potential region of interest, from the multiple potential regions of interest, from a scene in the edit of the video on the basis of the pinching gesture.

11. Apparatus as claimed in any of the preceding claims, wherein creating an edit of the video comprises defining metadata that defines future playback of the video.

12. Apparatus as claimed in any of claims 1 to 8, wherein the computer program instructions are configured, working with the at least one processor, to further cause the following to be performed: providing an adjustable view area that enables a user to select the at least one region of interest.

13. A method, comprising:
causing playback of a video;
determining at least one region of interest, selected by a user, from multiple potential regions of interest in the video; and
creating an edit of the video that depends upon the at least one region of interest selected by the user.

14. The method as claimed in claim 13, further comprising: pausing the video at an instance in time in the video; and causing the apparatus to enter an edit mode, when the video is paused, which enables a user to select the at least one region of interest from the multiple potential regions of interest.

15. Computer program instructions that, when run on at least one processor, cause the method of claim 13 or 14 to be performed.
